# EUROPÄISCHE PATENTSCHRIFT

(11) **EP 0 491 749 B1**
(45) Veröffentlichungstag und Bekanntmachung des Hinweises auf die Patenterteilung: **01.06.1994**
(21) Anmeldenummer: 90913167.4
(22) Anmeldetag: 07.09.1990
(51) Int. Cl.: G01D 5/30, G01B 9/021

(54) **VORRICHTUNG ZUR ABSOLUTEN ZWEIDIMENSIONALEN POSITIONSMESSUNG**
DEVICE FOR ABSOLUTE TWO-DIMENSIONAL POSITION MEASUREMENT
DISPOSITIF DE MESURE DE POSITION ABSOLUE SUR DEUX DIMENSIONS

(30) Priorität: 13.09.1989 DE 3930554
(43) Veröffentlichungstag der Anmeldung: 01.07.1992
(73) Patentinhaber: ROBERT BOSCH GMBH, 70442 Stuttgart (DE)
(72) Erfinder: PRINZHAUSEN, Friedrich, D-7000 Stuttgart 75 (DE); DRABAREK, Pawel, D-7257 Ditzingen (DE)
(86) Internationale Anmeldenummer: DE9000684
(87) Internationale Veröffentlichungsnummer: WO9104460

(56) Entgegenhaltungen:
- DE-A- 2 236 489
- DE-A- 3 821 046

## Beschreibung

Die Erfindung betrifft eine Vorrichtung zur absoluten zweidimensionalen Positionsmessung eines Teils in bezug auf eine Meßanordnung.

In der Patentanmeldung DE-A-38 21 046 ist ein Verfahren zur optoelektronischen Weg- und/oder Winkelmessung beschrieben, bei dem auf die Oberfläche eines zu vermessenden Objekts unter vorgegebenen Winkeln eine erste und zweite optische Strahlung gerichtet sind, die an einem gemeinsamen Auftreffort auf der Oberfläche diffraktiert werden. Beide Strahlungen weisen entweder eine unterschiedliche Frequenz auf oder die Frequenz der beiden Strahlungen ändert sich gleichzeitig, wobei eine der Strahlungen eine Phasenmodulation aufweist. Ausgewertet wird die Phasenänderung des von einem optischen Sensor abgegebenen Signals in bezug auf ein Referenzsignal. Am Auftreffort der beiden Strahlungen auf der Oberfläche des zu vermessenden Objekts findet eine Diffraktion statt, weil die Oberfläche stets eine gewisse Rauhigkeit aufweist, die die Wirkung eines optischen Gitters hat. Mit dem bekannten Verfahren ist eine absolute Positionsmessung möglich, wenn zu einem bestimmten Meßzeitpunkt, beispielsweise am Meßbeginn eine Bezugsposition definiert wird. Eine absolute Positionsmessung des zu vermessenden Teils in bezug auf die Meßanordnung aufgrund der gerade erfaßten Meßwerte ist dagegen nicht möglich.

Der Erfindung liegt die Aufgabe zugrunde, eine Vorrichtung zur zweidimensionalen Positionsmessung eines Teils in bezug auf eine Meßanordnung anzugeben, die eine absolute Positionsmessung aus den gerade vorliegenden Meßwerten gestattet. Diese Aufgabe wird durch die Merkmale des Anspruchs 1 gelöst.

Die erfindungsgemäße Vorrichtung gemäß dem Anspruch 1 weist eine sehr hohe Auflösung bei relativ geringem Aufwand auf. Die Ausgestaltung wenigstens einer Oberfläche des zu vermessenden Teils als Hologramm gestattet die Unterbringung einer großen Informationsdichte, die von der einfach ausgestalteten optischen Meßanordnung ausgewertet wird.

Die im Hologramm enthaltene Information wird dadurch ausgewertet, daß eine Meßwelle auf das Hologramm gerichtet ist und daß eine Referenzwelle zum Interferieren mit der vom Hologramm diffraktierten Meßwelle vorgesehen ist. Die interferierten Wellen werden von einer Sensoranordnung erfaßt, die wenigstens zwei Sensoren exthält, die ihre Ausgangssignale an eine signalverarbeitende Anordnung abgeben, die aus diesen Signalen und aus in einem Speicher hinterlegten Werten die absolute zweidimensionale Position des Teils in bezug auf die Meßanordnung ermittelt.

Gemäß einem ersten Ausführungsbeispiel der erfindungsgemäßen Vorrichtung ist vorgesehen, daß die signalverarbeitende Anordnung die absolute Position aus den zur Intensität der interferierten Wellen proportionalen Ausgangssignale der Sensoren ermittelt, beispielsweise durch Differenz- oder Quotientenbildung der von den wenigstens zwei Sensoren abgegebenen Signalen. Der wesentliche Vorteil dieses Ausführungsbeispiels liegt in der einfachen Ausgestaltung der optischen Anordnung, weil sowohl die Meß- als auch die Referenzwelle dieselbe Frequenz aufweisen können.

In einem zweiten Ausführungsbeispiel ist vorgesehen, daß die signalverarbeitende Anordnung die absolute Position aus den Phasenbeziehungen zwischen den von den wenigstens zwei Sensoren abgegebenen Ausgangssignalen ermittelt. In diesem Ausführungsbeispiel ist es erforderlich, daß zwischen Meß- und Referenzwelle eine Phasen- oder Frequenzmodulation auftritt. Die Modulation ermöglicht die Auswertung der Phasenbeziehungen in einem im Vergleich zur optischen Frequenz der Meß- und Referenzwelle sehr niedrigen Frequenz, die mit einer einfachen elektronischen Anordnung auswertbar ist. Dieses Ausfürungsbeispiel weist den besonderen Vorteil auf, daß die Intensitäten von Meß- und Referenzwelle nicht in das Ergebnis der absoluten Positionsmessung eingehen. Es wird daher eine höhere Meßgenauigkeit und/oder Auflösung erreicht.

In einer vorteilhaften Ausgestaltung der erfindungsgemäßen Vorrichtung ist vorgesehen, daß die Meß- und Referenzwelle aus unterschiedlichen Richtungen auf einen gemeinsamen Auftreffort des Hologramms gerichtet sind. Eine Justierung der optischen Anordnung ist in dieser Ausgestaltung einfach durchzuführen, weil lediglich sichergestellt werden muß, daß sowohl die Meß- als auch die Referenzwelle auf den gemeinsamen Auftreffort gerichtet sind. Die Justierung der optischen Sensoranordnung ist besonders einfach. Es muß lediglich sichergestellt werden, daß die am Auftreffort diffraktierten und interferierten Wellen auf die Sensoren auftreffen.

Geringe Abmessungen der optischen Meßanordnung sind durch die Verwendung eines Halbleiterlasers als Strahlungsquelle möglich, wobei der optische Aufbau vorzugsweise in integrierter Optik erfolgt.

Eine weitere Erhöhung der Auflösung und der Meßgenauigkeit ist möglich, wenn die optische Sensoranordnung als Zeile oder als eine zweidimensionale Multisensoranordnung ausgebildet ist. Bei dieser Ausgestaltung der optischen Sensoranordnung werden die Ausgangssignale von mehreren Sensoren jeweils ausgewertet.

Gemäß einer vorteilhaften Weiterbildung der erfindungsgemäßen Vorrichtung sind jeweils wenigstens eine weitere Meß- und Referenzwelle vorgesehen, die gegenüber den bereits vorhandenen Wellen eine unterschiedliche Wellenlänge aufweisen.

In einem ersten Ausführungsbeispiel der Weiterbildung sind auch zwei weitere Sensoren in der Sensoranordnung vorgesehen, wobei beide Sensorgruppen jeweils eine Wellenlänge der interferierten Wellen erfassen. Die Aufteilung der optischen Meßanordnung, zwei Teile mit unterschiedlichen Wellenlängen ermöglicht eine einfache Realisierung des Hologramms, weil beispielsweise der einen Dimension die eine und der anderen Dimension die andere Wellenlänge zugeordnet werden kann. Die Berechnung und die Herstellung des Hologramms werden dann besonders einfach.

In einer weiteren Ausgestaltung der Weiterbildung ist vorgesehen, daß die unterschiedlichen Wellenlängen zeitlich im Wechsel erzeugt werden. Besonders vorteilhaft ist der geringe Aufwand für die Sensoranordnung, die lediglich zwei Sensoren enthalten muß, weil die signalverarbeitende Anordnung die Zuordnung zu den verschiedenen Wellenlängen anhand eines ihr zu diesem Zweck zugeführten Signals vornehmen kann.

Weitere Verbesserungen und Weiterbildungen der erfindungsgemäßen Vorrichtung ergeben sich aus weiteren abhängigen Ansprüchen in Verbindung mit der folgenden Beschreibung.

### Zeichnung

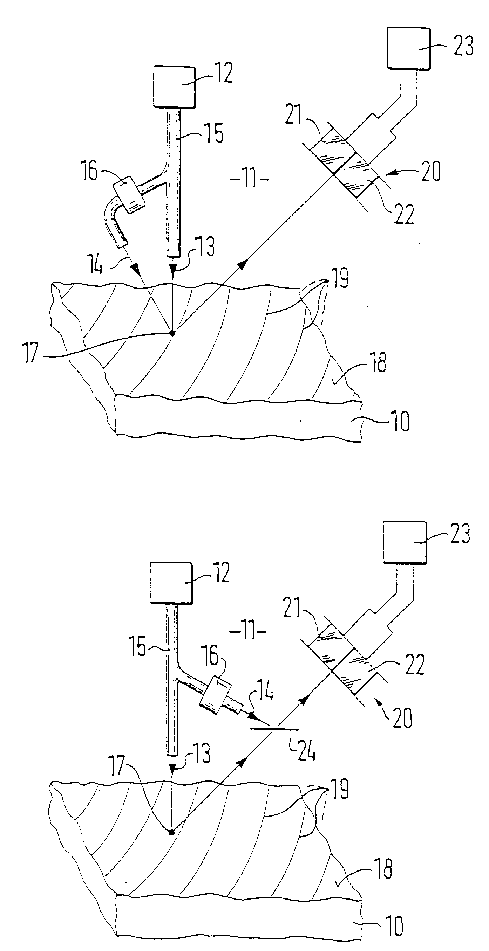

Figuren 1 und 2 zeigen zwei Ausgestaltungen einer erfindungsgemäßen Vorrichtung zur absoluten zweidimensionalen Positionsmessung.

Figur 1 zeigt ein Teil 10, dessen absolute zweidimensionale Position in bezug auf eine Meßanordnung 11 gemessen wird. Die optische Meßanordnung 11 enthält eine Strahlungsquelle 12, aus deren Strahlung eine Meßwelle 13 und eine Referenzwelle 14 abgeleitet werden. Sowohl die Meß- als auch die Referenzwelle 13, 14 sind in einem Lichtwellenleiter 15 geführt. Im Strahlengang der Referenzwelle ist ein Modulator 16 angeordnet. Die Meß- und Referenzwelle 13, 14 sind auf einen gemeinsamen Auftreffort 17 auf der als Hologramm ausgebildeten Oberfläche 18 des Teils 10 gerichtet. Die Struktur des Hologramms ist mit den Linien 19 angedeutet. Die am Auftreffort 17 diffraktierten Wellen 13, 14 interferieren und werden von einer optischen Sensoranordnung 20 erfaßt, die wenigstens zwei Sensoren 21, 22 enthält. Die Ausgangssignale der Sensoren 29, 22 werden einer signalverarbeitenden Anordnung 23 zugeführt, die die Position ermittelt.

Figur 2 zeigt eine alternative Ausgestaltung des Strahlengangs der in Figur 1 gezeigten Vorrichtung. Diejenigen Teile, die mit den in Figur 1 gezeigten übereinstimmen, tragen in Figur 2 dieselben Bezugszahlen wie in Figur 1. Die Referenzwelle 14 wird mit der Meßwelle 13 an einen Ort zur Überlagerung gebracht, der zwischen der Sensoranordnung 20 und dem Hologramm 18 liegt. Zur Vereinigung der beiden Wellen 13, 14 ist ein Strahlteiler 24 vorgesehen.

Die erfindungsgemäßen Vorrichtungen gemäß den Figuren 1 und 2 arbeiten folgendermaßen:

Die Information über die absolute zweidimensionale Position des Teils 10 in bezug auf die optische Meßanordnung 11 ist in der Oberfläche 18 des Teils 10 enthalten, die als Hologramm ausgebildet ist. Das Hologramm ist auch separat herstellbar und anschließend mit der Oberfläche des Teils 10 verbindbar. Die Struktur des Hologramms 18 ist theoretisch berechenbar und sieht in der Praxis erheblich komplizierter aus, als es mit den Linien 19 in vereinfachter Form skizziert ist. Die im Hologramm 18 enthaltene Information wird auf optischem Wege ausgelesen. Die auf das Hologramm 18 gerichtete Meßwelle 13 wird im Auftreffpunkt 17 diffraktiert. Die Positionsinformation ist in der Phasenlage der diffraktierten Welle enthalten, die gegenüber der Referenzwelle 14 ausgewertet wird, die dazu mit der Meßwelle 13 zur Interferenz gebracht wird. Gemäß Figur 1 findet eine Interferenz dadurch statt, daß sowohl Meß- als auch Referenzwelle 13, 14 auf denselben Auftreffort 17 gerichtet werden. Es ist aber nicht erforderlich, daß auch die Referenzwelle 14 auf das Hologramm 18 trifft. Gemäß Figur 2 kann deshalb auch vorgesehen sein, daß die Referenzwelle 14 erst unmittelbar vor der optischen Sensoranordnung 20 mit der vom Hologramm diffraktierten Meßwelle 13 zur Interferenz gebracht wird. Die Referenzwelle 14 kann beispielsweise direkt auf die Sensoranordnung 20 gerichtet werden. Es kann auch ein Strahlteiler 24 zur Vereinigung der beiden Wellen 13, 14 vorgesehen sein.

Die zur Interferenz gebrachten Wellen gelangen auf die optische Sensoranordnung 20, die wenigstens zwei Sensoren 21, 22 enthält. In Abhängigkeit von dem vom Hologramm verursachten Wellenfrontunterschied zwischen den Meß- und Referenzwelle 13, 14 treten an den beiden Sensoren 21, 22 unterschiedliche Strahlungsintensitäten auf.

In der signalverarbeitenden Anordnung 23 wird aus dem Intensitätsunterschied die absolute zweidimensionale Position anhand eines Vergleichs mit einem in einem Speicher hinterlegten Wert ermittelt. Die signalverarbeitende Anordnung 23 berechnet beispielsweise die an den Sensoren 21, 22 aufgetretene Signaldifferenz oder bildet beispielsweise daraus ein Verhältnis. Eine höhere Auflösung und/oder Meßgenauigkeit wird erhalten, wenn mehr als zwei Sensoren 21, 22 in der Sensoranordnung 20 enthalten sind. Die Sensoranordnung 20 ist beispielsweise als Zeilen- oder zweidimensionale Multisensoranordnung ausgebildet. In der Signalverarbeitenden Anordnung 23 stehen in diesem Fall mehrere Signale zur Verfügung, die zur absoluten Positionsbestimmung verwendbar sind.

In einer weiteren Ausgestaltung wird die absolute Position aus der Phasendifferenz ermittelt, die zwischen den Sensoren 21, 22 auftritt. Die Ermittlung der Phasenbeziehungen im optischen Frequenzbe- reich wird vermieden, wenn entweder die Meß- oder die Referenzwelle 13, 14 eine Phasen- oder Frequenzmodulation zueinander aufweisen. Im Ergebnis sind Phasen- und Frequenzmodulation gleich. Zu diesem Zweck ist der Modulator 16 vorgesehen, der beispielsweise die Referenzwelle 14 entsprechend moduliert. Die Phasenbeziehung zwischen den von den Sensoren 21, 22 abgegebenen Signalen ist in der signalverar-beitenden Anordnung 23 im Bereich der Modulationsfrequenz des Modulators 16 durchführbar.

Die Auswertung der Phaseninformation hat gegenüber der Auswertung der Intensitäten den wesentlichen Vorteil, daß Intensitätsveränderungen die Positionsermittlung nicht beeinflussen, die beispielsweise durch Verschmutzung der optischen Komponenten oder beispielsweise Alterungserscheinungen auftreten könnten.

Die aufwendige Berechnung der Hologrammstruktur kann vereinfacht werden, wenn für jede der beiden zu bestimmenden Richtungen bei der Positionsmessung getrennte Strukturen vorgebbar sind. Die Auswertung der unterschiedlichen Strukturen ist möglich durch Verwendung von zwei optischen Strahlungen unterschiedlicher Wellenlängen.

Gemäß einer ersten Weiterbildung der erfindungsgemäßen Vorrichtung sind zwei Meß- und Referenzwellen 13, 14 vorgesehen, wobei die Sensoranordnung 20 wenigstens zwei Sensoren für die eine und wenigstens zwei Sensoren für dem Empfang der Strahlung mit der anderen Wellenlänge enthält. Es ist ein völlig getrennter Aufbau der beiden Meßanordnungen 11 für die beiden Wellenlängen möglich. Vorzugsweise werden einige Teile des Meßaufbaus 11 für beide Wellenlängen gleichzeitig benutzt. Es ist möglich, beide Meßstrahlen 13 mit unterschiedlicher Wellenlänge gemeinsam zu führen, wobei die Referenzstrahlungen 14 einen Winkel von etwa 90 Grad bezogen auf die Projektionen der Referenzstrahlungen 14 auf die Oberfläche 18 für die beiden Meßrichtungen aufweisen. Ebenso ist es möglich, die beiden Meßstrahlungen 13 für beide Meßrichtungen aufzuteilen und die Referenzstrahlungen 14 gemeinsam zu führen. Die Strahlungsquelle 12 kann entweder die Strahlungen mit unterschiedlichen Wellenlägen separat oder gemeinsam erzeugen.

In einer Weiterbildung der Meßanordnung 11 mit zwei Meß- und zwei Referenzwellen 13, 14 ist eine Umschaltung der Wellenlänge der Meß- und Referenzlänge 13, 14 in vorgebbaren zeitlichen Abständen vorgesehen. In einem ersten Zeitabschnitt wird die Wellenlänge für die Positionsmessung in der einen und in einem nächsten Zeitabschnitt die Wellenlänge für die Positionsmessung in der anderen Meßrichtung erzeugt. Der besondere Vorteil dieser Weiterbildung ist darin zu sehen, daß lediglich zwei Sensoren 21, 22 erforderlich sind. Die notwendige getrennte Auswertung bei den unterschiedlichen Wellenlängen wird in der signalverarbeitenden Anordnung 23 vorgenommen, der ein Signal zugeführt wird, das die jeweils vorliegende Wellenlänge der Meß- und Referenzwellen angibt.

Die optische Meßanordnung 11 ist vorzugsweise in integrierter Optik aufgebaut, wobei wenigstens die Meß- und Referenzwelle 13, 14 in einem Lichtwellenleiter 15 geführt werden. Als Strahlungsquelle 12 ist in besonderem Maße ein Halbleiterlaser geeignet, der eine besonders kompakte Bauform der Meßanordnung 11 ermöglicht.

Die Justierung der optischen Meßanordnung 11 beschränkt sich im wesentlichen darauf, die Meß- und Referenzwelle 13, 14 zur Interferenz zu bringen. Die Einfallswinkel der Meßwelle 13 und gegebenenfalls der Referenzwelle 14 in bezug auf das Hologramm 18 einerseits und der Beobachtungswinkel der Sensoranordnung 20 in bezug auf das Hologramm 18 andererseits, sind innerhalb gewisser Grenzen frei wählbar.

## Patentansprüche

1. Vorrichtung zur absoluten zweidimensionalen Positionsmessung eines Teils (10) in bezug auf eine Meßanordnung (11), bei der eine optische Meßwelle (13) auf eine als Hologramm ausgebildete Oberfläche (18) des Teils (10) gerichtet ist, bei der eine optische Referenzwelle (14) zum Interferieren mit der vom Hologramm (18) diffraktierten Meßwelle (13) vorhanden ist, mit einer optischen Sensoranordnung (20) zum Erfassen der interferierten Wellen (13, 14), die wenigstens zwei Sensoren (21, 22) enthält, mit einer signalverarbeitenden Anordnung (23), die aus den Ausgangssignalen der Sensoren (21, 22) und aus einem in einem Speicher hinterlegten Wert die Position ermittelt.

2. Vorrichtung nach Anspruch 1, bei der die signalverarbeitende Anordnung (23) die absolute Position aus den zur Intensität der interferierten Wellen (13, 14) proportionalen Ausgangssignalen der Sensoren (21, 22) ermittelt.

3. Vorrichtung nach Anspruch 1, bei der zwischen Meß- und Referenzwelle (13, 14) eine Phasen- oder Frequenzmodulation vorgesehen ist und die signalverarbeitende Anordnung (23) die absolute Position aus der Phasenbeziehung zwischen den Ausgangssignalen der Sensoren (21, 22) ermittelt.

4. Vorrichtung nach einem der vorhergehenden Ansprüche, bei der die Meß- und Referenzwelle (13, 14) aus unterschiedlichen Richtungen auf einen gemeinsamen Auftreffort (17) des Hologramms (18) gerichtet sind.

5. Vorrichtung nach einem der Ansprüche 1 bis 3, bei der die Referenzwelle (14) mit der am Auftreffort (17) diffraktierten Meßwelle (13) interferiert wird.

6. Vorrichtung nach einem der vorhergehenden Ansprüche, mit einem Halbleiterlaser (12) zur Erzeugung der Meß- und Referenzwelle (13, 14).

7. Vorrichtung nach einem der vorhergehenden Ansprüche, mit einem optoakustischen Modulator (16) zur Modulation der Meß- oder Referenzwelle (13, 14).

8. Vorrichtung nach einem der vorhergehenden Ansprüche, mit einer als Zeile ausgebildeten Multisensoranordnung (20).

9. Vorrichtung nach einem der Ansprüche 1 bis 7, mit wenigstens vier optischen Sensoren, die in einer zweidimensionalen Sensoranordnung (20) vorgesehen sind.

10. Vorrichtung nach einem der vorhergehenden Ansprüche, bei der wenigstens eine weitere optische Meßwelle auf die als Hologramm ausgebildete Oberfläche (18) des Teils (10) gerichtet ist, bei der wenigstens eine weitere optische Referenzwelle zum Interferieren mit der vom Hologramm (18) diffraktierten Meßwelle vorgesehen ist, wobei die weitere Meß- und Referenzwelle gegenüber der ersten Meß- und Referenzwelle (13, 14) eine andere Wellenlänge aufweist, und wobei die Meß- und Referenzwelle (13, 14) mit der einen Wellenlänge für die Positionsmessung in der einen Meßrichtung auf der Oberfläche (18) und die Meß- und Referenzwelle (13, 14) mit der anderen Wellenlänge für die Positionsmessung in einer anderen, vorzugsweise um 90° gedrehten Meßrichtung auf der Oberfläche (18) vorgesehen ist und mit einer optischen Sensoranordnung, die wenigstens zwei Gruppen von wenigstens zwei Sensoren enthält und beide Sensorgruppen jeweils eine bestimmte Wellenlänge der interferierten Wellen erfassen.

11. Vorrichtung nach einem der Ansprüche 1 bis 9, bei der wenigstens eine weitere optische Meßwelle auf die als Hologramm ausgebildete Oberfläche (18) des Teils (10) gerichtet ist, bei der wenigstens eine weitere optische Referenzwelle zum Interferieren mit der vom Hologramm (18) diffraktierten Meßwelle vorgesehen ist, wobei die weitere Meß- und Referenzwelle gegenüber der ersten Meß- und Referenzwelle (13, 14) eine andere Wellenlänge aufweist, wobei abwechselnd jeweils Meß- und Referenzwellen (13, 14) die eine und anschließend die andere Wellenlänge aufweisen und wobei die Meß- und Referenzwelle (13, 14) mit der einen Frequenz für die Positionsmessung in der einen Richtung und die Meß- und Referenzwelle (13, 14) mit der anderen Wellenlänge für die Positionsmessung in einer anderen Richtung auf der Oberfläche (18) vorgesehen ist, und mit einem der signalverarbeitenden Anordnung (23) zugeführten Signal, das die jeweils vorliegende Wellenlänge der Meß- und Referenzwelle (13, 14) angibt.

12. Vorrichtung nach einem der vorhergehenden Ansprüche, realisiert in integrierter Optik.

## Claims

1. Device for measuring the absolute two-dimensional position of a part (10) with respect to a measuring arrangement (11), in which an optical measurement wave (13) is directed onto a surface (18) of the part (10), which surface is constructed as a hologram, in which device an optical reference wave (14) is provided to interfere with the measurement wave (13) diffracted by the hologram (18), having an optical sensor arrangement (20) to detect the waves (13, 14) which have interfered, which sensor arrangement includes at least two sensors (21, 22), having a signal-processing arrangement (23), which determines the position from the output signals of the sensors (21, 22) and from a value filed in a memory.

2. Device according to Claim 1, in which the signal-processing arrangement (23) determines the absolute position from the output signals of the sensors (21, 22), which output signals are proportional to the intensity of the waves (13, 14) which have interfered.

3. Device according to Claim 1, in which a phase modulation or frequency modulation is provided between measurement wave and reference wave (13, 14), and the signal-processing arrangement (23) determines the absolute position from the phase relationship between the output signals of the sensors (21, 22).

4. Device according to one of the preceding claims, in which the measurement wave and reference wave (13, 14) are directed from different directions onto a common point of incidence (17) of the hologram (18).

5. Device according to one of Claims 1 to 3, in which the reference wave (14) is caused to interfere with the measurement wave (13) diffracted at the point of incidence (17).

6. Device according to one of the preceding claims, having a semiconductor laser (12) to generate the measurement wave and reference wave (13, 14).

7. Device according to one of the preceding claims, having an optoacoustic modulator (16) for the modulation of the measurement wave or reference wave (13, 14).

8. Device according to one of the preceding claims, having a multisensor arrangement (20) designed in the form of a line.

9. Device according to one of Claims 1 to 7, having at least four optical sensors which are provided in a two-dimensional sensor arrangement (20).

10. Device according to one of the preceding claims, in which at least one further optical measurement wave is directed onto the surface (18) of the part (10), which surface is constructed as a hologram, in which device at least one further optical reference wave is provided to interfere with the measurement wave diffracted by the hologram (18), in which the further measurement wave and reference wave exhibit a different wavelength as compared with the first measurement wave and reference wave (13, 14), and in which the measurement wave and reference wave (13, 14) of the one wavelength are provided for the position measurement in the one direction of measurement on the surface (18) and the measurement wave and reference wave (13, 14) of the other wavelength are provided for the position measurement in another direction of measurement, preferably rotated through 90°, on the surface (18), and having an optical sensor arrangement which includes at least two groups of at least two sensors and the two sensor groups detect in each instance a specified wavelength of the waves which have interfered.

11. Device according to one of Claims 1 to 9, in which at least one further optical measurement wave is directed onto the surface (18) of the part (10), which surface is constructed as a hologram, in which device at least one further optical reference wave is provided to interfere with the measurement wave diffracted by the hologram (18), in which the further measurement wave and reference wave exhibit a different wavelength as compared with the first measurement wave and reference wave (13, 14), in which alternately in each instance the measurement wave and reference wave (13, 14) exhibit the one and subsequently the other wavelength, and in which the measurement wave and reference wave (13, 14) of the one frequency are provided for the position measurement in the one direction and the measurement wave and reference wave (13, 14) of the other wavelength are provided for the position measurement in another direction on the surface (18), and having a signal which is fed to the signal-processing arrangement (23) and which indicates the respectively applicable wavelength of the measurement wave and reference wave (13, 14).

12. Device according to one of the preceding claims, constructed using integrated optics.

## Revendications

1. Dispositif de mesure de position, absolue en deux dimensions d'une pièce (10) par rapport à un montage de mesure (11), selon lequel on dirige une onde de mesure (13) optique sur une surface (18) en forme d'hologramme d'une pièce (10), on onde de référence, optique (14) étant disponible pour interférer avec l'onde de mesure (13) diffractée par l'hologramme (18), un montage de capteurs (20) pour détecter les ondes d'interférence (13, 14), ce montage comprenant au moins deux capteurs (21, 22) avec un montage (23) de traitement de signal qui détermine la position à partir des signaux de sortie des capteurs (21, 22) et d'une valeur enregistrée dans une mémoire.

2. Dispositif selon la revendication 1 selon lequel le montage de traitement de signal (23) détermine la position absolue à partir de signaux de sortie des capteurs (21, 22) proportionnels à l'intensité des ondes en interférence (13, 14).

3. Dispositif selon la revendication 1 selon lequel le montage de traitement de signal (23) détermine la position absolue à partir de la relation de phase des signaux de sortie des capteurs (21, 22).

4. Dispositif selon l'une des revendications précédentes selon lequel l'onde de mesure et l'onde de référence (13, 14) sont dirigées suivant des directions différentes sur un point d'incidence commun (17) de l'hologramme (18).

5. Dispositif selon l'une des revendications 1 à 3 selon lequel l'onde de référence (14) est mise en interférence avec l'onde de mesure diffractée (13) au point d'incidence (17).

6. Dispositif selon l'une des revendications précédentes comportant un laser à semiconducteur (12) pour créer une onde mesure et de référence (13, 14).

7. Dispositif selon l'une des revendications précédentes comportant un modulateur optoacoustique (16) pour moduler l'onde de mesure et de référence (13, 14).

8. Dispositif selon l'une des revendications précédentes comportant un montage à capteurs multiples (20) disposés suivant une ligne.

9. Dispositif selon l'une des revendications 1 à 7 comportant au moins quatre capteurs optiques prévus dans un montage de capteurs (20) à deux dimensions.

10. Dispositif selon l'une des revendications précédentes dans lequel au moins une autre onde de mesure optique est dirigée sur la surface (18) de la pièce, surface comportant un hologramme, au moins une autre onde de référence optique étant prévue pour interférer avec l'onde de mesure diffractée par l'hologramme (18), l'autre onde de mesure et de référence ayant une autre longueur d'onde que la première onde de mesure et de référence (13, 14) et l'onde de mesure et de référence (13, 14) ayant une longueur d'onde pour la mesure de position dans l'une des mesures de direction à la surface (18) et l'onde de mesure et de référence (13, 14) ayant une autre longueur d'onde pour la mesure de position dans l'autre direction de mesure tournée de préférence à 90° à la surface (18) et un montage de capteurs optiques comportant au moins deux groupes formés chacun d'au moins deux capteurs et les deux groupes de capteurs recevant chaque fois une longueur d'onde déterminée des ondes d'interférence.

11. Dispositif selon l'une des revendications 1 à 9 selon lequel au moins une autre onde de mesure optique est dirigée à la surface (18) de la pièce (10) en forme d'hologramme, au moins une autre onde de référence, optique étant prévue pour interférer avec l'onde de mesure diffractée par l'hologramme (18), l'autre onde de mesure et de référence ayant une autre longueur d'onde que la première onde de mesure et de référence (13, 14), et alternativement chaque fois des ondes de mesure et de référence (13, 14) ayant l'une ou l'autre longueur d'onde et les ondes de mesure et de référence (13, 14) avec une fréquence pour la mesure de position étant prévues dans une direction et l'onde de mesure et de référence (13, 14) avec l'autre longueur d'onde étant associée à la mesure de position dans l'autre direction à la surface (18) et un signal fourni au montage (23) de traitement de signal qui indique les longueurs d'onde respectives pour l'onde de mesure et de référence (13, 14).

12. Dispositif selon l'une des revendications précédentes, caractérisé en ce qu'il est réalisé sous la forme d'une optique intégrée.
